# EUROPÄISCHE PATENTSCHRIFT

(11) **EP 0 741 270 B1**
(45) Veröffentlichungstag und Bekanntmachung des Hinweises auf die Patenterteilung: **23.02.2005**
(21) Anmeldenummer: 96106754.3
(22) Anmeldetag: 29.04.1996
(51) Int. Cl.: F25B 15/10, F25B 49/04

(54) **Verfahren zum betreiben eines Absorptionskühlaggregates sowie Absorptionskühlaggregat**
Method of operating an absorption refrigeration apparatus and the absorption refrigeration apparatus
Procédé de fonctionnement d'un appareil frigorifique à absorption et l'appareil frigorifique à absorption

(30) Priorität: 05.05.1995 DE 19516630
(43) Veröffentlichungstag der Anmeldung: 06.11.1996
(73) Patentinhaber: Dometic GmbH, 57074 Siegen (DE)
(72) Erfinder: Müller, Volker, Electrolux Siegen GmbH, 57074 Siegen (DE); Haegerstrand, Eva, Electrolux Leisure Appl. AG, 8500 Frauenfeld (CH); Lorek, Manfred, Electolux Siegen GmbH, 57074 Siegen (DE)
(74) Vertreter: GROSSE BOCKHORNI SCHUMACHER

(56) Entgegenhaltungen:
- DE-A- 2 318 237
- DE-C- 730 963
- US-A- 1 898 977
- US-A- 2 122 625
- US-A- 2 141 882
- US-A- 2 164 045
- US-A- 2 269 100
- US-A- 2 280 051
- US-A- 3 874 193
- US-A- 5 156 013

## Beschreibung

Die Erfindung betrifft ein Verfahren zum Betreiben eines einen Austreiber, Kondensor, Verdampfer und Absorber umfassenden Absorptionskühlaggregates mit einem Lösungsmittelkreislauf mit einem zwischen starker und schwacher Konzentration eines Arbeitsmittels wechselnden Lösungsmittels, einem Arbeitsmittelkreislauf mit einem zwischen in dem Lösungsmittel gelösten, einem gasförmigen und einem flüssigen Zustand wechselnden Arbeitsmittel, einem Hilfsgaskreislauf mit einem zwischen starker und schwacher Konzentration des Arbeitsmittel wechselnden Hilfsgases, wobei das Arbeitsmittel aus der an Arbeitsmittel reichen Lösung unter Zufuhr von Wärmeenergie ausgetrieben und anschließend durch Wärmeentzug verflüssigt, unter Aufnahme von Wärme aus einem zu kühlenden Raum verdampft und von der an Arbeitsmittel armen Lösung absorbiert wird, und wobei das Hilfsgas als Träger für das Arbeitsmittel zwischen der Verdampfungsphase und der Absorptionsphase dient. Ein solches Verfahren ist aus Dokument US-A-2 280 051 schon bekannt. Die Erfindung betrifft ferner ein Absorptionskühlaggregat zur Durchführung des Verfahrens sowie einen Kühlschrank, der mit einem vorbeschriebenen Absorptionskühlaggregat ausgestattet ist.

Absorptionskühlaggregate werden im Gegensatz zu den mit einem mechanisch betriebenen Verdichter arbeitenden Kompressionkühlaggregaten mit Wärmeenergie betrieben. Die Möglichkeit, außer elektrischer Energie auch mit einem Wärmeerzeuger, wie etwa einem Gasbrenner arbeiten zu können, hat zu einer verbreiteten Anwendung von Absorptionskühlaggregaten der Eingangs genannten Art in Kleinkühlgeräten für Campingfahrzeuge, Boote und dgl. geführt. Desweiteren werden Absorptionskühlgeräte dort eingesetzt, wo man lautlos arbeitende Kühlschränke benötigt, z.B. sogenannte miniBars zur Selbstbedienung in Hotelzimmern.

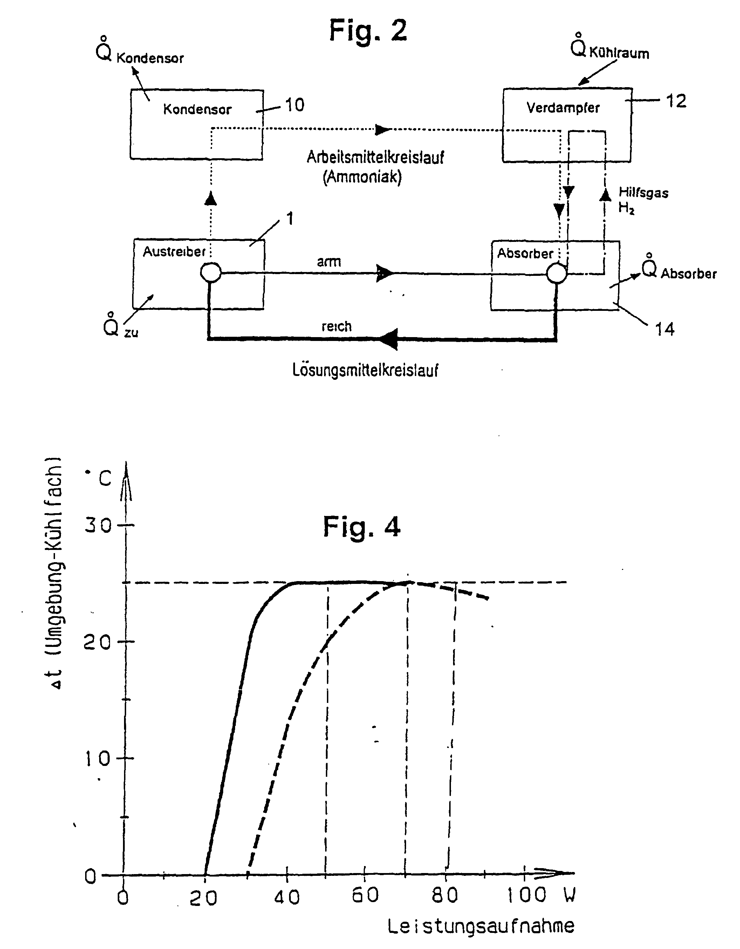

Ein Absorptionskühlaggregat weist die in Fig. 2 schematisch angedeuteten Hauptkomponenten Austreiber, Kondensor, Verdampfer und Absorber auf. Ferner ist zwischen drei Kreisläufen zu unterscheiden, nämlich einem Lösungsmittelkreislauf, einem Arbeitsmittelkreislauf und einem Hilfsgaskreislauf, wobei das Lösungsmittel in dem hier vorliegenden Anwendungsgebiet Wasser bzw. eine wäßrige Ammoniaklösung, das Arbeitsmittel Ammoniak und das Hilfsgas Wasserstoff oder Helium sind.

Die durchgezogenen Linien in Fig. 2 stellen den Lösungsmittelkreislauf dar, der zwei Massenströme unterschiedlicher Ammoniakkonzentration aufweist, einen dünn gezeichneten Strom schwacher Konzentration (arm an Arbeitsmittel Ammoniak) und einen dicker gezeichneten Strom starker Konzentration (reich an Arbeitsmittel Ammoniak).

Die punktierte Linie zeigt demgegenüber den Arbeitsmittelkreislauf. Das Ammoniak wird im Austreiber durch Wärmezufuhr von der stark konzentrierten Lösung getrennt und anschließend im Kondensor durch Wärmeentzug verflüssigt. Der Verdampfungsvorgang des flüssigen Ammoniaks im Verdampfer entzieht dem Kühlraum Wärme auf einem niedrigen Temperaturniveau. Das gasförmige Ammoniak strömt dann in den Absorber und wird von dem an Ammoniak armen Lösungsmittel absorbiert. Damit ist der Kältekreislauf geschlossen.

Die strichpunktierten Linien im rechten Teil der Fig. 2 zeigen den Hilfsgaskreislauf, wobei das Hilfsgas von Wasserstoff gebildet wird. Im unteren Teil des Absorbers ist der Wasserstoff am stärksten mit Ammoniakgas angereichert, während die Ammoniakkonzentration zum oberen Teil des Absorbers abnimmt, weil das Ammoniak von der entgegengesetzt strömenden armen Lösung absorbiert wird. Je geringer die Ammoniakkonzentration ist, umso leichter ist das Hilfsgas, so daß es im Absorber zum Verdampfer nach oben steigen kann. Im Verdampfer ist nahezu reiner Wasserstoff vorhanden. Im Verdampfer vermischt sich das reine Hilfsgas mit dem verdampfenden Ammoniak, so daß die Gasmischung schwer wird und nach unten zum Absorber drückt, wobei sie gleichzeitig die leichtere Gasmischung aus einem Behälter in den Absorberrohrwindungen vor sich herschiebt. Damit ist der Hilfsgaskreislauf geschlossen.

Da die drei Kreisläufe über das Rohrsystem des Absorptionskühlaggregates miteinander in Verbindung stehen, bewirkt die Änderung in einem Kreislauf Änderungen in den beiden anderen Kreisläufen.

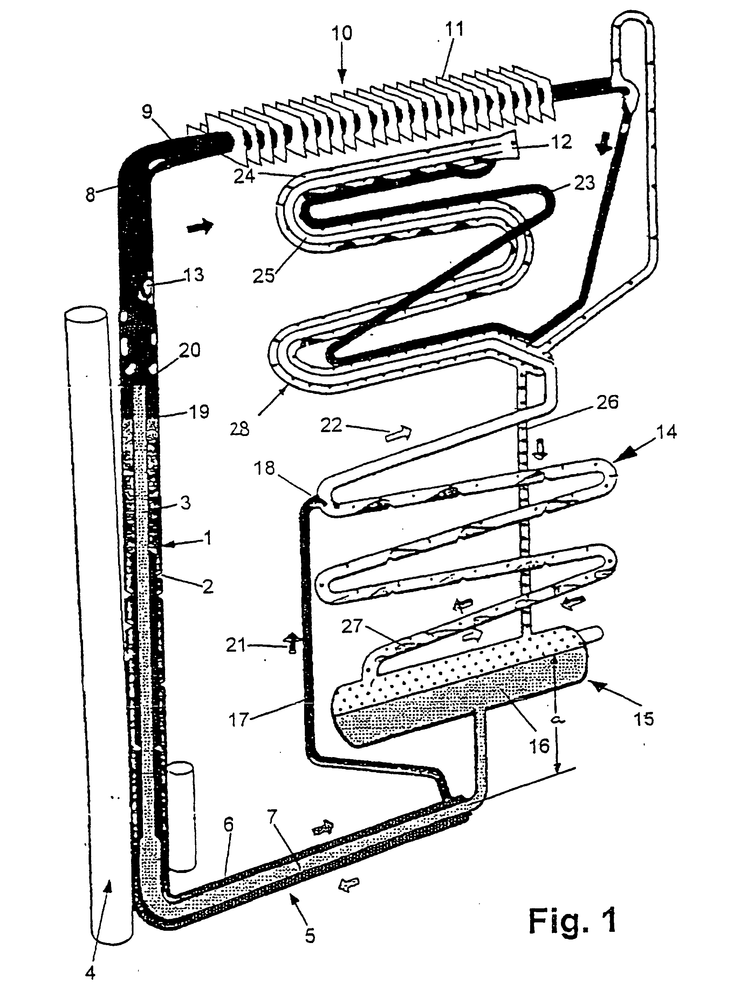

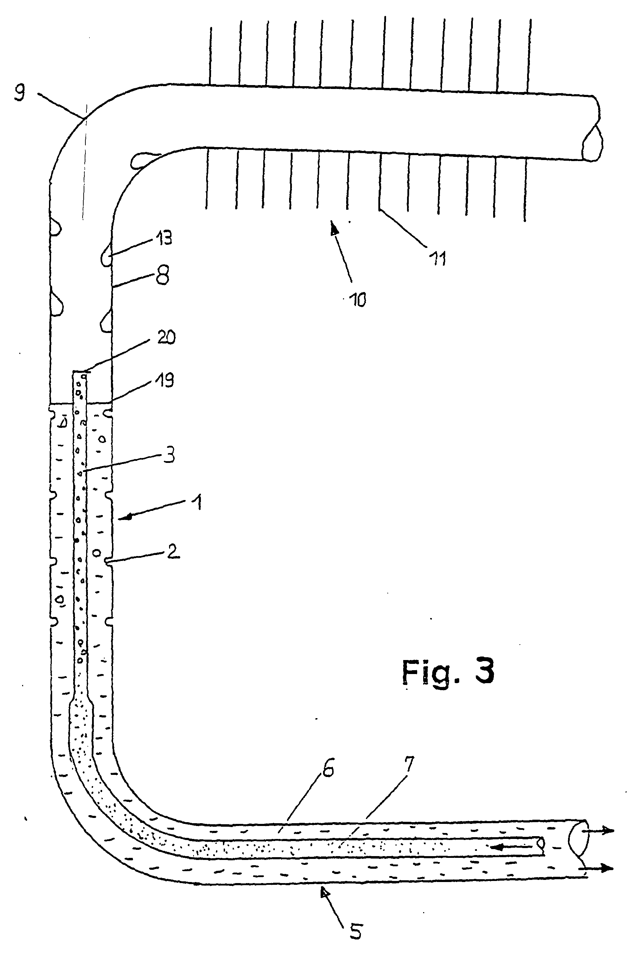

In der Fig. 1 sind weitere Einzelheiten des erfindungsgemäßen Absorptionskühlaggregates gezeigt.

Der Austreiber ist als Dampfblasenpumpe ausgebildet, bei der innerhalb eines zylindrischen, von außen beheizten Kocherrohres ein Pumpenrohr angeordnet ist, in welches die reiche Lösung von unten eingeleitet wird. Bei der Erhitzung verdampft das Ammoniak aus der Wasserlösung und steigt in dem Pumpenrohr in Form von Blasen nach oben. Der Dichteunterschied zwischen der in dem Pumpenrohr befindlichen, mit Dampfblasen angereicherten Flüssigkeit und der reichen Lösungsmittelsäule "a" in Fig.1 bewirkt die Zirkulation des Lösungsmittels, wobei das Lösungsmittel in Gegenstromrichtung zur reichen Lösung als arme Lösung über ein Einlaufrohr zum Absorber gelangt.

Der aufsteigende Ammoniakdampf führt einen geringen Anteil Wasser mit sich, der in dem zwischen dem Austreiber und dem Kondensor befindlichen Rohrstück weitgehend ausgetrieben wird. Dieses Rohrstück dient somit als Wasserabscheider.

In den Eingang des Austreibers führt eine Leitung aus zwei konzentrischen Rohren. In dem inneren Rohr wird die reiche Lösung dem Austreiber zugeführt, während in dem äußeren Ringraum die schwach konzentrierte arme Lösung, die an dem Austreiber erhitzt wurde, zurückläuft. Das konzentrische Rohrstück dient somit als Flüssigkeits-Gegenstromwärmetauscher, in welchem die Wärme von der armen Lösung auf die reiche Lösung abgegeben wird, so daß diese vorgewärmt zum Austreiber gelangt.

Ein Absorptionskühlaggregat der gemäß Fig.2 vorbeschriebenen Art wird über einen Thermostaten geregelt, der auf dem Verdampfer im Kühlraum angeordnet ist. Unterschreitet die Temperatur im Kühlraum einen gegebenen Sollwert von zum Beispiel 4° C, dann wird die Heizeinrichtung des Austreibers abgestellt, so daß die Temperatur im Kocherbereich so tief absinkt, daß das reiche Lösungsmittel nicht mehr gekocht wird. Dies bedeutet, daß der Lösungsmittelkreislauf unterbrochen wird. Infolgedessen wird kein Ammoniakdampf bzw. im Kondensor kein flüssiges Ammoniak mehr bereitgestellt, so daß der Arbeitsmittelkreislauf unterbrochen wird. Dadurch wird auch der Gaskreislauf unterbrochen, weil keine reiche, schwere Gasmischung mehr erzeugt wird, nach unten strömt und die arme Gasmenge vor sich her zum Verdampfer schiebt. Wenn der Betrieb des Absorptionskühlaggregates zum Erliegen gekommen ist, steigt die Temperatur im Kühlraum. Sobald die Temperatur einen vorgegebenen Schwellwert, beispielsweise 8° C, erreicht, wird die Heizeinrichtung durch die Thermostatregelung wieder in Betrieb genommen, um die inzwischen stark abgekühlte Temperatur im Bereich des Kochers wieder auf die Temperatur von ca. 160° - 200° anzuheben. Bei maximaler Leistungsaufnahme wird der Kocherbereich nun auf 160° - 200° C aufgeheizt, wobei während des Aufheizungsvorganges noch kein Ammoniak ausgetrieben wird. Man kann davon ausgehen, daß der Betrieb des Absorptionskühlaggregates erst nach 2 - 20 Minuten gestartet ist und sich die oben beschriebenen Kreisläufe eingestellt haben. Erst von diesem Zeitpunkt an wird eine Kühlleistung bereitgestellt, wobei dann auf eine tiefere Temperatur als die Solltemperatur von 6° C herabgekühlt wird, bevor das System infolge der Thermostatsteuerung abgestellt wird. Die Thermostatsteuerung erfolgt im :Ein- mit voller Leistungsaufnahme / Aus-Modus.

Den Vorteilen eines Absorptionskühlaggregates der vorbeschriebenen Art, wie einfacher Aufbau ohne bewegte Teile und geräuschloser, wartungsfreier Betrieb steht als wesentlicher Nachteil ein verhältnismäßig hoher Energiebedarf entgegen, so daß sich auf die Kälteleistung bezogen ein relativ niedriger Wirkungsgrad ergibt. Zahlreiche Versuche und Vorschläge, den Wirkungsgrad zu verbessern, haben bislang nur in geringem Umfang zu Erfolgen geführt. Der Grund hierführ liegt in erster Linie in dem komplexen Zusammenwirken der voneinander abhängigen Verfahrens- und Geräteparameter, die genau aufeinander abgestimmt sein müssen. Wenn das Kühlaggregat gestartet wird, dann wird solange keine Kühlleistung erzielt, bis nach einer längeren Aufheizphase Ammoniak erzeugt und im Verdampfer bereitgestellt wird. Während dieser Aufheizphase muß maaximale Energie zugeführt werden. Durch die intermittierende Regelung des Kühlaggregats ist auch nicht zu verhindern, daß zuviel flüssiges Ammoniak im Verdampfer bereitgestellt wird, welches nicht vollständig im Verdampfer, sondern im Gaswärme-tauscher oder in der Verbindungsleitung zwischen Verdampfer und Absorber verdampft wird. Das bedeutet, daß die überschüssige Ammoniakmenge nicht zur gewünschten Kühlung im Kühlraum ausgenutzt werden kann, also einen Verlust darstellt.

Der Erfindung liegt daher die Aufgabe zugrunde, den Wirkungsgrad eines gattungsgemäßen Absorptionskühlaggregates wesentlich zu verbessern, d.h. bei verbesserter Leistung die Energieaufnahme erheblich zu reduzieren.

Diese Aufgabe wird durch die im Anspruch 1 angegebene Verfahrensweise und im Anspruch 15 angegebenen Merkmale des Absorptionskühlaggregates gelöst.

Erfindungsgemäß wird die Wärmeenergie zum Austreiben des Arbeitsmittels aus der an Arbeitsmittel reichen Lösung über die Heizeinrichtung dem Austreiber kontinuierlich zugeführt. Dabei wird erfindungsgemäß die Regelung der zur Austreibung benötigten Wärmeenergie in Abhängigkeit von Temperaturänderungen in Bezug auf eine vorgegebene, im wesentlichen gleichbleibende Temperatur in dem zu kühlendem Raum durchgeführt. Steigt die Temperatur im Kühlschrank um ΔT, wird dem Kocher über die Heizeinrichtung mehr Wärmeenergie zugeführt, so daß im Austreiber mehr Ammoniakdampf bereitgestellt wird bzw. über den Kondensor im Verdampfer mehr Ammoniak verdampft wird. Sinkt die Temperatur im Kühlraum unter den gewünschten Sollwert, erfolgt sofort eine angepaßte Steuerung der Heizeinrichtung im Hinblick auf eine geringere Leistungsaufnahme, so daß im Verdampfer weniger Ammoniak bereitgestellt wird. Die Temperaturänderungen werden in vorteilhafter Weise mit wenigstens einem im Luftraum des zu kühlenden Raumes angeordneten Sensor erfaßt.

Im Gegensatz zu der herkömmlichen intermittierenden Betriebsweise nach dem on-off-Modus erfolgt die Regelung der zur Austreibung benötigten Wärmeenergie mit einem elektronischen Modul unter Verwendung von Fuzzi Logic Regeln. Die Leistungsaufnahme wird mit Hilfe dieser Fuzzi Logic Regeln kontinuierlich angepaßt, so daß nur verhältnismäßig geringe Temperaturschwankungen im zu kühlendem Raum auftreten, die durch Störfaktoren, wie das Öffnen des Kühlschrankes, das Einlagern von wärmeren Nahrungsmitteln und dgl. bedingt sind.

Der erfindungsgemäße Einsatz des elektronischen Moduls mit Fuzzi Logic Regelung ermöglicht es auch, die Betriebszeit des Absorptionskühlaggregates zu steuern. Da aufgrund der kontinuierlichen Wärmezufuhr und der Steuerung mit Hilfe des elektronischen Moduls unter Verwendung der Fuzzi Logic Regeln ein wesentlich verbesserter Wirkungsgrad des Absorptions-kühlaggregates erreicht wird, wobei die Steuerung nur in verhältnismäßig kleinen ΔT Bereichen um den Sollwert erfolgt, muß die Verdampfertemperatur nicht so tief sein im Vergleich zu einer thermostatischen Steuerung. Ist aber ein höheres Verdampfertemperaturniveau möglich, so bedeutet dies andererseits, daß nicht so viel Ammoniak verdampft werden muß, wie bei einem thermostatischen Betrieb. Dies wiederum bedeutet, daß die Gasmischung im Absorber nicht so arm an Ammoniakkonzentration wie bei intermettierendem Betrieb, sondern reicher sein kann. Hierdurch wird die Partialdruckdifferenz zwischen der armen Gasmischung und dem Ammoniak geringer, so daß weniger Ammoniak verdampft. Da die Gasmischung im Absorber im Bereich des Einlaufrohres nicht so arm wie bei intermittierendem Betrieb sein muß, kann auch das durch das Einlaufrohr dem Absorber zugeführte arme Lösungsmittel eine höhere Ammoniakkonzentration aufweisen, d.h. reicher sein. Wenn jedoch die Konzentration im armen Lösungsmittel stärker als bei intermittierendem Betrieb ist, so bedeutet das, daß die im Kocher benötigte Temperatur auf einem niedrigeren Temperaturniveau liegen kann als bei intermittierendem Betrieb. Während bei intermittierendem Betrieb dieser Temperaturbereich bei etwa 160° - 200° C liegt, kann bei der erfindungsgemäßen, kontinuierlichen Zufuhr der Wärmeenergie das Temperaturniveau auf 140° - 150° C gesenkt werden. Dies hat vorteilhaft zur Folge, daß weniger Energie benötigt wird und infolgedessen geringere Verluste auftreten. Eine tiefere Temperatur im Kocherbereich und eine höhere Konzentration des Arbeitsmittels Ammoniak bedeuten auch, daß eine geringere Menge Wasser im Wasserabscheider anfällt.

Erfindungsgemäß ist die Konzentration des Arbeitsmittels in der armen Lösung von 10 bis 17% bei intermittierenden Betrieb bzw. diskontinuierlicher Zufuhr der Wärmeenergie auf bis auf 20 bis 25% bei kontinuierlicher Zufuhr der Wärmeenergie angehoben.

In weiterer erfindungsgemäßer Ausgestaltung des Betriebsverfahrens ist vorgesehen, daß der Betriebsdruck zur Reduzierung des Energieverbrauchs von ca. 19,5 bar bei diskontinuierlicher Zufuhr der Wärmeenergie auf ca. 15,5 bar bei kontinuierlicher Zufuhr der Wärmeenergie herabgesetzt wird.

Wenn die Konzentration der armen Lösung erhöht wird, bedeutet dies ein kräftiges Kochen im Austreiber. Infolgedessen verringert sich die Lösungszirkulation pro ausgekochter Ammoniakmenge. Daher ist in vorteilhafter Weise vorgesehen, daß die Umlaufmenge des Lösungsmittelkreislaufes gegenüber diskontinuierlicher Zufuhr der Wärmeenergie durch Verkürzen des Pumpenrohres des Austreibers erhöht, d.h. beschleunigt wird. Dies hat aber zur Folge, daß das Niveau der schwachen Lösung gegenüber einem Aggregat mit intermittierendem Betrieb abgesenkt werden muß, so daß sichergestellt ist, daß die schwache Lösung nicht in das Pumpenrohr des Kochers zurückfließen kann. Das Niveau der schwachen Lösung kann in erfindungsgemäßer Weise dadurch abgesenkt werden, daß das Strömungsquerschnitts-Verhältnis der an Arbeitsmittel armen Lösung des Austreibers im Pumpenbereich zum Einlaufrohr in den Absorber gegenüber diskontinuierlicher Zufuhr der Wärmeenergie verringert wird. Beispielsweise kann der Querschnitt des Einlaufrohres bei unverändertem Kocheraußendurchmesser vergrößert werden, so daß geringere Reibungsverluste im Einlaufrohr auftreten und dadurch das Niveau der armen Lösung im Austreiber, d.h. in dem das Pumpenrohr umgebenden Bereich abgesenkt wird. Die Absenkung des Niveaus wird aus Sicherheitsgründen derart gewählt, daß die aufsteigenden Ammoniakgasblasen im Außenrohr keine Lösungsmittelanteile soweit mittransportieren können, daß das Lösungsmittel in das Pumpenrohr zurückfließen kann.

Da im Wasserabscheider, d.h. dem Bereich zwischen dem Austreiber und dem Kondensor weniger Wasserdampf anfällt, ist in erfindungsgemäßer Weise vorgesehen, daß die Auskondensation des Wassers aus dem Dampf im Übergang vom Austreiber zum Kondensor gegenüber einem Aggregat mit diskontinuierlicher Zufuhr der Wärmeenergie verkürzt wird. Dies wird dadurch erreicht, daß der Austreiber über den Wasserabscheider mittels eines Krümmers direkt in den Kondensor übergeht. Andernfalls würde die Temperatur im Wasserabscheider so tief werden, daß bereits im Wasserabscheider Ammoniak verflüssigt und zurückfließen würde, was den Energieverbrauch erhöhen würde. Da der Wasserabscheider kürzer ist, treten auch geringere Energieverluste als bei diskontinuierlichem Betrieb auf. Da der Übergang vom Austreiber zum Kondensor in erfindungsgemäßer Weise verkürzt ist, jedoch sicher gestellt sein muß, daß dem Verdampfer verflüssigtes Ammoniak zur Verfügung gestellt wird, ist in weiterer vorteilhafter Weise vorgesehen, daß die Wärmeableitung im Kondensor gegenüber einem Betrieb mit diskontinuierlicher Wärmzufuhr vergrößert wird, indem im Kondensor eine vergrößerte Wärmeübergangsfläche im Vergleich zum intermittierenden Betrieb bereitgestellt wird. Dies führt zu einer verbesserten Wärmeabfuhr sowie zu einer vollständigen Kondensation des gasförmigen Ammoniaks, wobei eine Unterkühlung des Kondensats zu einer Verbesserung des Wirkungsgrades führt. Die vorerwähnte Reduzierung des Betriebsdruckes von 19,5 bar auf etwa 15,5 bar führt durch eine Bereitstellung einer vergrößerten Kühlfläche im Kondensorbereich nicht zu einer Leistungseinbuße.

Zur Erzeugung der Wärmeenergie kann in vorteilhafter Weise elektrische Energie verwendet werden, wobei diese Energieart vorwiegend bei Minibars in Hotelzimmern eingesetzt wird. In mobilen Fahrzeugen, wie Campingfahrzeugen oder Booten ist es jedoch auch denkbar, daß andere Energieerzeuger eingesetzt werden, wie Brenner, in denen flüssige, gasförmige oder feste Brennstoffe eingesetzt werden. Die Regelung dieser Brenner kann mittels des elektronischen Moduls unter Verwendung der Fuzzi Logic Regeln mittels Ventilsteuerung oder Steuerung der Sauerstoffzufuhr oder dgl.erfolgen.

Das erfindungsgemäße Absorptionskühlaggregat, welches zur Durchführung des vorbeschriebenen Verfahrens zum Einsatz kommt, und dessen grundsätzliche Bauelemente bereits oben beschrieben wurden, ist dadurch gekennzeichnet, daß diese Bauelemente des Aggregats auf eine kontinuierliche Zufuhr der Wärmeenergie ausgelegt und aufeinander abgestimmt sind. So ist beispielsweise der Austreiber als vertikal verlaufendes, gerades Rohr ausgebildet, das erfindungsgemäß mit einem Krümmer unmittelbar in den Kondensor einmündet. Durch die kurze Verbindung wird eine zu starke Abkühlung Ammoniakdampfes verhindert, so daß der Ammoniakdampf nicht bereits im Lösungsmittelabseider (Wasserabscheider) kondensiert, sondern daß dies erst in dem sich anschließenden vergrößerten Kondensor erfolgt. Auf diese Weise wird der Verlust an nutzbarem Kältemittel minimiert. Auch werden die Wärmeverluste an die Umgebung verringert, so daß die einzubringende Wärmemenge im Kocherbereich auch aus diesem Grunde verringert sein kann. Die Reduzierung der Kochertemperatur bringt den Vorteil mit sich, daß das Kühlaggregat geringeren thermischen Belastungen ausgesetzt ist. Wie bereits erwähnt, kann aufgrund des nur geringeren erforderlichen Temperaturniveaus die elektrische Leistungsaufnahme reduziert werden.

Die Länge des Lösungsmittelabscheiders kann beispielsweise 35 - 55 % der Länge des Pumpenrohres betragen. Das Pumpenrohr des Austreibers kann seinerseits gegenüber dem Pumpenrohr eines Austreibers für intermittierenden Betrieb verkürzt sein, beispielsweise um 3 %, was den Vorteil mit sich bringt, daß die einzubringende Wärmemenge reduziert sein kann und der an sich durch das geringere Temperaturniveau verlangsamte Austreibungsprozess beschleunigt wird.

Damit sichergestellt ist, daß bei verkürztem Pumpenrohr der kontinuierliche Kälteprozess aufrechterhalten wird, ist in erfindungsgemäßer Weise ferner vorgesehen, daß das Einlaufrohr für die arme Lösung einen Querschnitt aufweist, der dem 0,35 - 0,55-fachen des Strömungsquerschnittes für die arme Lösung im Austreiber entspricht. Hierdurch können die Strömungsverluste im Einlaufrohr des Absorbers reduziert werden, so daß das Niveau der armen Lösung im Kocher gesenkt wird und zwar derart, daß es sich immer unterhalb der oberen Mündung des Pumpenrohres befindet, so daß vermieden wird, daß arme Lösung durch das Pumpenrohr zurückströmen kann. Ferner ist vorteilhaft vorgesehen, daß der Kondensor gegenüber einem Kondensor eines Absorptionskühlaggregates mit intermittierendem Betrieb vergrößert ist. Durch die Vergrößerung der Wärmeübergangsfläche, beispielsweise Anzahl und Größe der Kühlrippen, wird eine bessere Wärmeabfuhr erreicht, so daß gewährleistet ist, daß trotz der kurzen Wegstrecke das gasförmige Ammoniak vollständig kondensiert und das Kondensat unterkühlt wird. Hierdurch wird der Wirkungsgrad des Absorptionskühlaggregates verbessert.

Schon bereits die gerätespezifischen Verbesserungen gegenüber herkömmlichen Absorptionskühlaggregaten bringen eine deutliche Leistungssteigerung, die allerdings durch die verfahrensmäßige kontinuierliche Wärmezufuhr noch weiter gesteigert werden kann.

Schließlich ist vorgesehen, daß der Austreiber eine Heizeinrichtung aufweist, welche den zylindrisch ausgebildeten Austreiber schalenförmig umgreift. Auf diese Weise wird zunächst eine optimale Wärmeübergangsfläche geschaffen, so daß die Wärmeeinbringung in den Kocher verbessert wird. Zusätzlich können die Wärmeverluste im Kocherbereich dadurch verringert werden, daß die Heizeinrichtung nach außen wärmeisoliert ist. Als Heizeinrichtung kann beispielsweise eine elektrische Widerstandsheizung oder wahlweise eine Brennereinrichtung zum Einsatz kommen, wobei letztere wahlweise mit Gas, flüssigem Brennstoff oder festem Brennstoff betrieben werden kann.

In weiterer vorteilhafter Ausgestaltung der Erfindung ist vorgesehen, daß das Gehäuse des mit dem Absorptionskühlaggregat ausgestatteten Kühlschrankes mit Vakuumisolationspaneelen isoliert ist. Wenn Vakuumpaneele verwendet werden, muß die Verdampfertemperatur im Vergleich zu einem Kühlschrank mit Polyurethanisolation nicht so tief sein. Die vorgenannten Verbesserungsmöglichkeiten bei kontinuierlichem Betrieb werden dann gegenüber thermostatischem Betrieb verstärkt.

Weitere Merkmale, Vorteile und Einzelheiten der Erfindung ergeben sich aus der nachfolgenden Beschreibung eines bevorzugten Ausführungsbeispiels anhand der Zeichnung. Darin zeigen:
- Fig.1: eine schematische Darstellung des erfindungsgemäßen Absorptionskühlaggregates;
- Fig.2: den prinzipiellen Verfahrensablauf in einem Absorptionskühlaggregat;
- Fig.3: den Kocher und Kondensor eines Absorptionskühlaggregates gemäß der Erfindung mit dazwischen angeordnetem Wasserabscheider, und
- Fig.4: ein Leistungsdiagram.

In Fig. 1 ist der Austreiber 1 des Absorptionskühlaggregates erkennbar, der die Form eines zylindrischen Rohres mit in dessen Umfang eingearbeiteten Sicken 2 besitzt. Der Austreiber 1 ist als Kocher ausgebildet, in welchem ein Pumpenrohr 3 konzentrisch angeordnet ist, welches nach oben hin offen ist. An der Außenseite des Austreibers 1 befindet sich eine Heizeinrichtung 4, welche z. B. von einer elektrischen Widerstandsheizung oder einem Brennersystem gebildet sein kann.

In den Austreiber 1 mündet von unten ein Wärmetauscher 5, der aus einem Außenrohr 6 und einem Innenrohr 7 besteht. In dem Innenrohr 7 wird die an Ammoniak reiche Lösung dem Austreiber zugeführt, während in dem Ringraum zwischen dem Innenrohr und dem Außenrohr 6 die arme Lösung zurückläuft. Das Innenrohr mündet innerhalb des Austreibers 1 in das Pumpenrohr 3 ein, welches einen geringeren Durchmesser als das Innenrohr aufweist.

Das Außenrohr des Austreibers 1 setzt sich kontinuierlich in den Wasserabscheider 8 fort, der senkrecht nach oben läuft und in einen Krümmer 9 übergeht, welcher seinerseits in den Kondensor 10 einmündet. Der Kondensor 10 ist mit einer Reihe von Kühlrippen 11 ausgestattet.

Wenn das Außenrohr des Austreibers oder Kochers 1 durch die Heizeinrichtung 4 erwärmt wird, wird die Wärme durch die arme Lösung, welche sich in dem Ringraum zwischen dem Außenrohr des Austreibers 1 und dem Pumpenrohr 3 befindet, auf die reiche Lösung übertragen, welche sich in dem Pumpenrohr 3 befindet, wodurch das gelöste Ammoniak in Form von Gasblasen ausgetrieben wird, die in dem Pumpenrohr nach oben steigen. Die Gasblasen verringern das Gewicht der Flüssigkeitssäule innerhalb des Pumpenrohres 3 gegenüber der Flüssigkeitssäule in dem umgebenden Ringraum, so daß sich eine Strömung in dem Pumpenrohr nach oben und in dem Ringraum nach unten einstellt. Da die Konzentration des Ammoniaks im Pumpenrohr 3 größer als im Ringraum ist, findet im Pumpenrohr 3 eine verstärkte Ammoniakgasbildung statt, während im umgebenden Ringraum nur noch wenig Ammoniakgasblasen aufsteigen.

Das gasförmige Ammoniak steigt durch den Wasserabscheider 8 nach oben und gelangt über den Krümmer 9 in den Kondensor 10, in dem es unter Wärmeabgabe zu Flüssigkeit kondensiert. Der Kondensor 10 ist in Strömungsrichtung (in Fig.1 nach rechts) schwach abgeneigt, so daß das kondensierte, flüssige Ammoniak in Richtung zum Verdampfer 12 abläuft.

Je nach den herrschenden Druck- und Temperaturverhältnissen verdampft eine geringe Menge des Wassers, in dem das Ammoniak gelöst ist, mit. Dieses Wasser schlägt sich in dem Wasserabscheider 8 in Form von Tropfen 13 nieder und fließt in die arme Lösung zurück. Es hat sich gezeigt, daß das verhältnismäßig kurze vertikale Rohrstück des Wasserabscheiders 8 ausreicht, um das Wasser weitgehend auszuscheiden, ohne daß es zu einer vorzeitigen Kondensation des Ammoniaks vor dem Eintritt in den Kondensor 10 kommt. Die wirksame Länge des Wasserabscheiders 8 beträgt auf die Länge des Pumpenrohres 3 bezogen etwa 45 %.

Im rechten Teil der Fig. 1 ist der Absorber 14 dargestellt. Das konzentrische Rohr 7 des Wärmetauschers 5 mündet in die Unterseite eines Vorratsbehälters 15, in welchem sich im unteren Teil reiche Ammoniaklösung befindet. Das äußere Rohr 6 des Wärmetauschers 5 geht in ein senkrechtes Einlaufrohr 17 über, welches an der Stelle 18 in den Absorber 14 einmündet. Da das Niveau 19 der armen Ammoniaklösung im Austreiber 1 höher liegt als der Einlauf 18, ist gewährleistet, daß eine Strömung in Richtung des Pfeiles 21 erfolgt. Andererseits ist das Pumpenrohende 20 oberhalb des Flüssigkeitsniveaus 19 angeordnet, und das Flüssigkeitsniveau wird dadurch reguliert, daß die Querschnittsverhältnisse vom Pumpenrohr 3 zum Einlaufrohr 17 entsprechend gewählt werden. Es könnte auch vorgesehen sein, daß beispielsweise im Einlaufrohr 17 eine geeignete Drosseleinrichtung vorgesehen ist, mit der die Strömung in Richtung des Pfeiles 21 beeinflußt werden kann.

Über das Einlaufrohr 17 gelangt die arme Ammoniaklösung in die Rohrschleifen des Absorbers 14 und strömt in diesen zum Behälter 15 nach unten. Dabei wird aus dem in Richtung des Pfeils 22 nach oben strömenden Hilfsgas (Wasserstoff oder Helium) Ammoniakgas absorbiert, so daß die Ammoniakkonzentration immer schwächer wird und schließlich oberhalb des Einlaufs 18 in den Rohrleitungen des Absorbers nahezu reines Hilfsgas nach oben strömt. Dieses Hilfsgas gelangt über den Gaswärmetauscher 28 zum Verdampfer 12, wo es das über das Rohr 23 zugeführte flüssige Ammoniak, welches im Verdampfer 12 in die Dampfphase übergeht, aufnimmt.

Wie zu erkennen ist, weist der Verdampfer 12 ein Außenrohr 24 und ein konzentrisches Innenrohr 25 auf, durch welches das Hilfsgas Wasserstoff in den Verdampfer gelangt. Im Außenrohr wird das durch die Aufnahme von Ammoniakdampf schwerer gewordene Hilfsgas nach unten abgeleitet und gelangt über eine Verbindungsleitung 26 in den oberen Bereich des Behälters 15. Da das Ammoniak aus dem Hilfsgas mittels der Tropfen 27 der schwachen Lösung absorbiert wird, wird das Hilfsgas leichter und steigt entsprechend den Pfeilen 22 wieder in den Rohrwindungen des Absorbers 14 nach oben, so daß dadurch der Hilfsgaskreislauf geschlossen ist. Gleichzeitig wird durch die zunehmende Absorption des Ammoniaks das arme Lösungsmittel zum reichen Lösungsmittel 16, welches über das Innenerohr 7 des Wärmetauschers wieder dem Austreiber 1 zugeleitet wird.

In der Fig. 4 ist die Temperaturdifferenz-Umgebung/Kühlfach in °C über der Leistungsaufnahme der Heizeinrichtung 4 in Watt aufgetragen. Die durchgezogene und gestrichelte Linie zeigen Absorptionskühlaggregate mit kontinuierlicher Leistungsaufnahme, bei welchen die Regelung der zur Austreibung benötigten Wärmeenergie in Abhängigkeit von Temperaturänderungen mit Hilfe eines elektronischen Moduls unter Verwendung von Fuzzi Logic Regeln erfolgt. Während die durchgezogene Linie eine erfindungsgemäßen Vorrichtung zeigt, bei der die einzelnen Bauelemente des Aggregats auf eine kontinuierliche Zufuhr der Wärmeenergie ausgelegt und aufeinander abgestimmt sind, wie dies oben beschrieben wurde, zeigt die gestrichelte Linie ein Absorptionskühlaggregat, das zwar kontinuierlich betrieben wird, bei dem eine solche Abstimmung der Bauelemente jedoch nicht erfolgt ist. Beim Vergleich der Diagrammkurven ist deutlich zu erkennen, daß die erfindungsgemäße Vorrichtung bei unterschiedlichen Temperaturdifferenzen deutlich weniger Wärmeenergie benötigt als das nicht baulich abgestimmte Gerät.

### Bezugszeichenliste

- 1.: Austreiber
- 2.: Sicke
- 3: Pumpenrohr
- 4: Heizeinrichtung
- 5: Flüssigkeits-Wärmetauscher
- 6: Außenrohr
- 7: Innenrohr
- 8: Wasserabscheider
- 9: Krümmer
- 10: Kondensor
- 11: Kühlrippe
- 12: Verdampfer
- 13: Tropfen
- 14: Absorber
- 15: Vorratsbehälter
- 16: reiche Ammoniaklösung
- 17: Einlaufrohr
- 18: Einlauf
- 19: Niveau der armen Ammoniaklösung
- 20: Pumpenrohrende
- 21: Strömung
- 22: Strömung Hilfsgas
- 23: Rohr
- 24: Außenrohr
- 25: Innenrohr
- 26: Verbindungsleitung
- 27: Tropfen
- 28: Gaswärmetauscher

## Patentansprüche

1. Verfahren zum Betreiben eines einen Austreiber (1), Kondensor (10), Verdampfer (12) und Absorber (14) umfassenden Absorptionskühlaggregates mit
- einem Lösungsmittelkreislauf mit einem zwischen starker und schwacher Konzentration eines Arbeitsmittels wechselnden Lösungsmittel,
- einem Arbeitsmittelkreislauf mit einem zwischen in dem Lösungsmittel gelösten, einem gasförmigen und einem flüssigen Zustand wechselnden Arbeitsmittel,
- einem Hilfsgaskreislauf mit einem zwischen starker und schwacher Konzentration des Arbeitsmittels wechselnden Hilfsgas,
wobei das Arbeitsmittel aus der an Arbeitsmittel reichen Lösung unter Zufuhr von Wärmeenergie ausgetrieben und anschließend durch Wärmentzug verflüssigt, unter Aufnahme von Wärme aus einem zu kühlenden Raum verdampft und von der an Arbeitsmittel armen Lösung absorbiert wird,
und wobei das Hilfsgas als Träger für das Arbeitsmittel zwischen der Verdampfungsphase und der Absorptionsphase dient,
**dadurch gekennzeichnet, dass**
die Zufuhr von Wärmeenergie zum Austreiben des Arbeitsmittels aus der an Arbeitsmittel reichen Lösung adaptiv in Abhängigkeit von Temperaturänderungen in Bezug auf eine vorgegebene gleichbleibende Temperatur im Kühlraum kontinuierlich erfolgt, so dass der Kühlprozess nicht unterbrochen wird.

2. Verfahren nach Anspruch 1, **dadurch gekennzeichnet, dass** die Temperaturänderungen mit wenigstens einem im Luftraum des zu kühlenden Raumes angeordneten Sensor erfasst werden.

3. Verfahren nach einem der vorhergehenden Ansprüche, **dadurch gekennzeichnet, dass** die Regelung der Temperatur des zu kühlenden Raumes für jeden Betriebsfall durch eine bestimmte Wärmezufuhr zum Austreiben des Arbeitsmittels im Austreiber erfolgt.

4. Verfahren nach einem der vorhergehenden Ansprüche, **dadurch gekennzeichnet, dass** die Regelung der zur Austreibung benötigten Wärmeenergie mit einem elektronischen Modul unter Verwendung von Fuzzy Logic Regeln erfolgt.

5. Verfahren nach einem der vorhergehenden Ansprüche, **dadurch gekennzeichnet, dass** die Austreibungstemperatur von dem Bereich 160° bis 200°C bei diskontinuierlicher Zufuhr der Wärmeenergie auf den Bereich von 140° bis 150°C bei kontinuierlicher Zufuhr der Wärmeenergie gesenkt wird.

6. Verfahren nach einem der vorhergehenden Ansprüche, **dadurch gekennzeichnet, dass** die Konzentration des Arbeitsmittels in der armen Lösung von 10 bis 17% bei diskontinuierlicher Zufuhr der Wärmeenergie auf bis zu 20 bis 25% bei kontinuierlicher Zufuhr der Wärmeenergie angehoben wird.

7. Verfahren nach einem der vorhergehenden Ansprüche, **dadurch gekennzeichnet, dass** der Betriebsdruck zur Reduzierung des Energieverbrauchs von ca.19,5 bar bei diskontinuierlicher Zufuhr der Wärmeenergie auf ca.15,5 bar bei kontinuierlicher Zufuhr der Wärmeenergie herabgesetzt wird.

8. Verfahren nach Anspruch 6, **dadurch gekennzeichnet, dass** die Umlaufmenge des Lösungsmittelkreislaufes gegenüber diskontinuierlicher Zufuhr der Wärmeenergie erhöht, d.h. beschleunigt wird.

9. Verfahren nach Anspruch 7 bis 8, **dadurch gekennzeichnet, dass** das Strömungsquerschnittsverhältnis der an Arbeitsmittel armen Lösung des Austreibers (1) im Pumpenbereich zum Einlaufrohr (17) in den Absorber (14) gegenüber diskontinuierlicher Zufuhr der Wärmeenergie verringert wird.

10. Verfahren nach Anspruch 7, **dadurch gekennzeichnet, dass** die Auskondensation des Wassers aus dem Dampf im Übergang von dem Austreiber (1) zum Kondensor (10) gegenüber diskontinuierlicher Zufuhr der Wärmeenergie verkürzt wird.

11. Verfahren nach den Ansprüchen 7 und 10, **dadurch gekennzeichnet, dass** die Wärmeableitung im Kondensor (10) gegenüber diskontinuierlicher Zufuhr der Wärmeenergie verstärkt wird.

12. Verfahren nach einem der vorhergehenden Ansprüche, **dadurch gekennzeichnet, dass** zur Erzeugung der Wärmeenergie elektrische Energie verwendet wird.

13. Verfahren nach einem der Ansprüche 1 bis 12, **dadurch gekennzeichnet, dass** zur Erzeugung der Wärmeenergie flüssige, gasförmige oder feste Brennstoffe verwendet werden.

14. Verfahren nach einem der vorhergehenden Ansprüche, **dadurch gekennzeichnet, dass** das Lösungsmittel Wasser, das Arbeitsmittel Ammoniak und das Hilfsgas Wasserstoff sind.

15. Absorptionskühlaggregat zur Durchführung des Verfahrens nach einem der vorhergehenden Ansprüche, mit
- einem in dem beheizbaren Austreiber (1) vertikal angeordneten Pumpenrohr (3),
- einem sich an den Austreiber (1) anschließenden Lösungsmittelabscheider (8),
- einem sich an den Lösungsmittelabscheider (8) anschließenden, in Strömungsrichtung leicht abwärts geneigten Kondensor (10),
- einem sich an den Kondensor (10) anschließenden und in dem zu kühlenden Raum angeordneten Verdampfer (12),
- einem sich an den Verdampfer (12) anschließenden Absorber (14) und
- einem Einlaufrohr (17) zum Einleiten der an Arbeitsmittel schwachen Lösung in den Absorber (14),
**gekennzeichnet durch** ein elektronisches Modul das unter Verwendung von Fuzzi Logik Regeln die Zufuhr von Wärmeenergie zum Austreiben des Arbeitsmittels aus der an Arbeitsmittel reichen Lösung adaptiv in Abhängigkeit von Temperaturänderungen steuert, um eine kontinuierliche Zufuhr von Wärmeenergie und **dadurch** eine kontinuierliche Austreibung des Arbeitsmittels zu gewährleisten, so dass der Kühlprozess nicht unterbrochen wird, wobei die einzelnen Bauelemente des Aggregats auf eine kontinuierliche Zufuhr der Wärmeenergie ausgelegt und aufeinander abgestimmt sind.

16. Aggregat nach Anspruch 15, **dadurch gekennzeichnet, dass** der Lösungsmittelabscheider (8) als vertikal verlaufendes, gerades Rohr ausgebildet ist, das sich unmittelbar an das Pumpenrohr (3) des Austreibers (1) anschließt und mit einem Krümmer (9) in den Kondensor (10) mündet.

17. Aggregat nach einem der Ansprüche 15 bis 16, **dadurch gekennzeichnet, dass** die Länge des den Lösungsmittelabscheider (8) bildenden Rohres 35 bis 55% der Länge des Pumpenrohres (3) beträgt.

18. Aggregat nach einem der Ansprüche 15 bis 17, **dadurch gekennzeichnet, dass** das Pumpenrohr (3) des Austreibers (1) gegenüber dem Pumpenrohr eines Austreibers für intermittierenden Betrieb verkürzt ist.

19. Aggregat nach einem der Ansprüche 15 bis 18, **dadurch gekennzeichnet, dass** das Einlaufrohr (17) für die arme Lösung einen Querschnitt aufweist, der dem 0,35 bis 0,55 fachen des Strömungsquerschnittes für die arme Lösung in dem Austreiber (1) entspricht.

20. Aggregat nach einem der Ansprüche 15 bis 19, **dadurch gekennzeichnet, dass** der Kondensor (10) gegenüber einem Kondensor für intermittierenden Betrieb vergrößert ist.

21. Aggregat nach einem der Ansprüche 15 bis 20, **dadurch gekennzeichnet, dass** der Austreiber (1) eine Heizeinrichtung (4) aufweist, welche den zylindrisch ausgebildeten Austreiber schalenförmig umgreift.

22. Aggregat nach Anspruch 21, **dadurch gekennzeichnet, dass** die Heizeinrichtung (4) von einer elektrischen Widerstandsheizung oder wahlweise von einer Brennereinrichtung gebildet ist.

23. Aggregat nach Anspruch 22, **dadurch gekennzeichnet, dass** die Heizeinrichtung (4) nach außen wärmeisoliert ist.

24. Kühlschrank mit einem Absorptionskühlaggregat nach einem der Ansprüche 15 bis 23, **dadurch gekennzeichnet, dass** das Gehäuse des Kühlschrankes mit Vakuumisolationspaneelen isoliert ist.

## Claims

1. Method of operating an absorption refrigeration unit comprising an expeller (1), a condenser (10), an evaporator (12) and an absorber (14), which unit has
- a solvent circuit containing solvent which alternates between high and low concentration of a working agent,
- a working agent circuit containing working agent which alternates between a state in which it is dissolved in the solvent, a gaseous state and a liquid state,
- an auxiliary gas circuit containing an auxiliary gas which alternates between high and low concentration of the working agent,
the working agent being expelled from the solution rich in working agent with the application of thermal energy and then being liquefied by heat abstraction, evaporated while taking up heat from a space to be refrigerated and absorbed by the solution low in working agent,
and the auxiliary gas serving as a carrier for the working agent between the evaporation phase and the absorption phase,
**characterised in that**
the thermal energy for expelling the working agent from the solution rich in working agent is supplied continuously and adaptively in dependence upon temperature changes with respect to a given constant temperature in the refrigeration space, so that the refrigeration process is not interrupted.

2. Method according to claim 1, **characterised in that** the temperature changes are detected by at least one sensor disposed in the air space of the space to be refrigerated.

3. Method according to either of the preceding claims, **characterised in that** regulation of the temperature of the space to be refrigerated is effected for each operating case by specific heat supply for expelling the working agent in the expeller.

4. Method according to any one of the preceding claims, **characterised in that** regulation of the thermal energy required for expulsion is effected by an electronic module using fuzzy logic rules.

5. Method according to any one of the preceding claims, **characterised in that** the expulsion temperature is reduced from the range 160° to 200°C in the case of discontinuous supply of thermal energy to the range 140° to 150°C in the case of continuous supply of thermal energy.

6. Method according to any one of the preceding claims, **characterised in that** the concentration of the working agent in the depleted solution is increased from 10 to 17 % in the case of discontinuous supply of thermal energy to up to 20 to 25 % in the case of continuous supply of thermal energy.

7. Method according to any one of the preceding claims, **characterised in that**, to reduce energy consumption, the operating pressure is reduced from approximately 19.5 bar in the case of discontinuous supply of thermal energy to approximately 15.5 bar in the case of continuous supply of thermal energy.

8. Method according to claim 6, **characterised in that** the circulating quantity of the solvent circuit is increased, i.e. accelerated, in comparison with discontinuous supply of thermal energy.

9. Method according to any one of claims 7 to 8, **characterised in that** the flow cross-section ratio of the working-agent-depleted solution of the expeller (1) in the pump region relative to the inlet pipe (17) into the absorber (14) is reduced in comparison with discontinuous supply of thermal energy.

10. Method according to claim 7, **characterised in that** the condensing of water from the vapour in the transition from the expeller (1) to the condenser (10) is shortened in comparison with discontinuous supply of thermal energy.

11. Method according to claim 7 and claim 10, **characterised in that** the heat dissipation in the condenser (10) is increased in comparison with discontinuous supply of thermal energy.

12. Method according to any one of the preceding claims, **characterised in that** electrical energy is used to generate the thermal energy.

13. Method according to any one of claims 1 to 12, **characterised in that** liquid, gaseous or solid fuels are used to generate the thermal energy.

14. Method according to any one of the preceding claims, **characterised in that** the solvent is water, the working agent is ammonia and the auxiliary gas is hydrogen.

15. Absorption refrigeration unit for carrying out the method according to any one of the preceding claims, comprising
- a pumping pipe (3) which is arranged vertically in the heatable expeller (1),
- a solvent separator (8) which adjoins the expeller (1),
- a condenser (10) which adjoins the solvent separator (8) and is slightly downwardly inclined in the flow direction,
- an evaporator (12) which adjoins the condenser (10) and is arranged in the space to be refrigerated,
- an absorber (14) which adjoins the evaporator (12) and
- an inlet pipe (17) for introducing the working-agent-depleted solution into the absorber (14),
**characterised by** an electronic module that, using fuzzy logic rules, controls the supply of thermal energy for expelling the working agent from the solution rich in working agent adaptively in dependence upon temperature changes in order to ensure a continuous supply of thermal energy and thereby a continuous expulsion of the working agent, so that the refrigeration process is not interrupted, the individual components of the unit being designed for continuous supply of thermal energy and being matched to one another.

16. Unit according to claim 15, **characterised in that** the solvent separator (8) is constructed as a straight, vertically extending pipe which directly adjoins the pumping pipe (3) of the expeller (1) and opens into the condenser (10) by an elbow (9).

17. Unit according to either claim 15 or claim 16, **characterised in that** the length of the pipe forming the solvent separator (8) is from 35 to 55 % of the length of the pumping pipe (3).

18. Unit according to any one of claims 15 to 17, **characterised in that** the pumping pipe (3) of the expeller is shortened in comparison with the pumping pipe of an expeller for intermittent operation.

19. Unit according to any one of claims 15 to 18, **characterised in that** the inlet pipe (17) for the depleted solution has a cross-section corresponding to 0.35 to 0.55 times the flow cross-section for the depleted solution in the expeller (1).

20. Unit according to any one of claims 15 to 19, **characterised in that** the condenser (10) is enlarged in comparison with a condenser for intermittent operation.

21. Unit according to any one of claims 15 to 20, **characterised in that** the expeller (1) has a heating device (4) which extends in the form of a shell around the cylindrically shaped expeller.

22. Unit according to claim 21, **characterised in that** the heating device (4) is formed by an electrical resistance heater or alternatively by a burner device.

23. Unit according to claim 22, **characterised in that** the heating device (4) is thermally insulated towards the outside.

24. Refrigerator having an absorption refrigeration unit according to any one of claims 15 to 23, **characterised in that** the housing of the refrigerator is insulated by vacuum insulation panels.

## Revendications

1. Procédé de fonctionnement d'un groupe réfrigérant à absorption comprenant un moyen d'expulsion (1), un condenseur (10), un évaporateur (12) et un absorbeur (14), pourvu de
- un circuit de solvant, avec une concentration en milieu de travail alternant entre une forte concentration et une faible concentration,
- un circuit de milieu de travail, avec un milieu de travail, dissous dans le solvant, alternant entre un état gazeux et un état liquide,
- un circuit de gaz auxiliaire, avec un gaz auxiliaire alternant entre une forte concentration et une faible concentration du milieu de travail,
- le milieu de travail étant expulsé de la solution riche en milieu de travail, avec apport d'énergie thermique et, ensuite, liquéfié par prélèvement de chaleur, évaporé avec prélèvement de chaleur à partir dune enceinte à refroidir et absorbé par la solution pauvre en milieu travail,
- le gaz auxiliaire faisant office de support pour le milieu de travail entre la phase d'évaporation et la phase d'absorption,
**caractérisé en ce que**
l'amenée d'énergie thermique pour expulser le milieu de travail hors de la solution riche en milieu de travail se fait de façon adaptative, continue, en fonction des fluctuations de la température par rapport à une température prédéterminée, constante, régnant dans l'enceinte à refroidir, de manière que le processus de refroidissement ne soit pas interrompu.

2. Procédé selon la revendication 1, **caractérisé en ce que** les fluctuations de température sont appréhendées à l'aide d'au moins un capteur disposé dans le volume d'air de l'enceinte à refroidir.

3. Procédé selon l'une des revendications précédentes, **caractérisé en ce que** la régulation de la température de l'enceinte à refroidir s'effectue, pour chaque cas de fonctionnement, par un apport de chaleur déterminé, en vue de l'expulsion du milieu de travail dans le moyen d'expulsion.

4. Procédé selon l'une des revendications précédentes, **caractérisé en ce que** la régulation de l'énergie thermique nécessaire pour l'expulsion s'effectue à l'aide d'un module électronique, avec utilisation de règles de logique floue.

5. Procédé selon l'une des revendications précédentes, **caractérisé en ce que** la température d'expulsion est descendue, de la plage comprise entre 160° à 200°C en cas d'apport discontinu d'énergie thermique, à la plage comprise entre 140° et 150° C en cas d'apport continu de l'énergie thermique.

6. Procédé selon l'une des revendications précédentes, **caractérisé en ce que** la concentration du milieu de travail dans la solution pauvre est augmentée, de la plage allant de 10 à 17 % en cas d'apport discontinu de l'énergie thermique, à la plage allant de 20 à 25 %, en cas d'apport continu de l'énergie thermique.

7. Procédé selon l'une des revendications précédentes, **caractérisé en ce que** la pression de fonctionnement est diminuée en vue de réduire la consommation d'énergie, d'environ 19,5 bar en cas d'apport discontinu de l'énergie thermique à la valeur d'environ 15,5 bar en cas d'apport continu de l'énergie thermique.

8. Procédé selon la revendication 6, **caractérisé en ce que** le débit mis en circulation dans le circuit de solvant est augmenté par rapport à un apport discontinu de l'énergie thermique, c'est-à-dire est accéléré.

9. Procédé selon les revendications 7 à 8, **caractérisé en ce que** le rapport des sections transversales offertes à l'écoulement, de la solution pauvre en milieu de travail, du moyen d'expulsion (1), dans la zone de pompage allant au tube d'entrée (17) dans l'absorbeur (14) est diminué par rapport à ce que l'on a en cas d'apport discontinu de l'énergie thermique.

10. Procédé selon la revendication 7, **caractérisé en ce que** la condensation de l'eau depuis la vapeur, dans la transition entre le moyen d'expulsion (1) et le condenseur (10), est diminuée par rapport à ce que l'on a en cas d'apport discontinu de l'énergie thermique.

11. Procédé selon !es revendications 7 et 10, **caractérisé en ce que** l'évacuation thermique faite dans le condenseur (10) est amplifiée par rapport à ce que l'on a lorsque l'apport d'énergie thermique est discontinu.

12. Procédé selon l'une des revendications précédentes, **caractérisé en ce que** l'on utilise de l'énergie électrique pour produire de l'énergie thermique.

13. Procédé selon l'une des revendications 1 à 12, **caractérisé en ce que** l'on utilise des combustibles liquides, gazeux ou solides pour produire l'énergie thermique.

14. Procédé selon l'une des revendications précédentes, **caractérisé en ce que** le solvant est de l'eau, le milieu de travail de l'ammoniaque et le gaz auxiliaire de l'hydrogène.

15. Groupe de refroidissement par absorption pour la mise en oeuvre du procédé selon l'une des revendications précédentes, comportant
- un tube de pompe (3) disposé verticalement dans le moyen d'expulsion (1) susceptible d'être chauffé,
- un séparateur de solvant (8) raccordé au moyen d'expulsion (1),
- un condenseur (10) légèrement incliné vers le bas dans la direction de l'écoulement et raccordé au séparateur de solvant (8),
- un évaporateur (12) raccordé au condenseur (10) et disposé dans l'enceinte à refroidir,
- un absorbeur (14) raccordé à l'évaporateur (12), et
- un tube d'entrée (17) destiné à introduire dans l'absorbeur (14) la solution à faible concentration en milieu de travail, **caractérisé par** un module électronique qui, en utilisant, des règles de la logique floue, assure l'amenée d'énergie thermique pour expulser le milieu de travail hors de la solution riche en milieu de travail, de façon adaptative, en fonction des fluctuations de la température, pour assurer une amenée continue d'énergie thermique et, de ce fait, une expulsion continue du milieu de travail, de manière que le processus de refroidissement ne soit pas interrompu, les différents composants du groupe étant conçus pour permettre un apport continu d'énergie thermique et étant adaptés les uns aux autres.

16. Groupe selon la revendication 15, **caractérisé en ce que** le séparateur de solvant (8) est réalisé sous la forme de tubes rectilignes courant verticalement, se raccordant directement au tube de pompe (3) du moyen d'expulsion (1) et débouchant dans le condenseur (10) par un coude (9).

17. Groupe selon l'une des revendications 15 à 16, **caractérisé en ce que** la longueur du tube constituant le séparateur de solvant (8) fait de 35 à 55 % de la longueur du tube de pompe (3).

18. Groupe selon l'une des revendications 15 à 17, **caractérisé en ce que** le tube de pompe (3) du moyen d'expulsion (1) est raccourci par rapport au tube de pompe d'un moyen d'expulsion destiné à un fonctionnement intermittent.

19. Groupe selon l'une des revendications 15 à 18, **caractérisé en ce que** le tube d'entrée (17) présente, pour la solution pauvre, une section transversale dont l'aire correspond à 0,35 à 0,55 fois celle de la section transversale d'écoulement offerte à la solution pauvre dans le moyen d'expulsion (1).

20. Groupe selon l'une des revendications 15 a 19, **caractérisé en ce que** le condenseur (10) est rendu plus gros par rapport à un condenseur destiné à un fonctionnement intermittent.

21. Groupe selon l'une des revendications 15 à 20, **caractérisé en ce que** le moyen d'expulsion (1) présente un dispositif de chauffage (4) englobant, en forme de coquille, le moyen d'expulsion de réalisation cylindrique.

22. Groupe selon la revendication 21, **caractérisé en ce que** le dispositif de chauffage (4) est constitué par un chauffage par résistance électrique ou bien, au choix, par un dispositif à brûleur.

23. Groupe selon la revendication 22, **caractérisé en ce que** le dispositif de chauffage (4) est isolé thermiquement vis-à-vis de l'extérieur.

24. Réfrigérateur équipé d'un groupe réfrigérant par absorption selon l'une des revendications 15 à 23, **caractérisé en ce que** le carter de l'armoire frigorifique est isolé à l'aide de panneaux isolants à vide.
